(19) Europäisches Patentamt
European Patent Office
Office européen des brevets

(11) Veröffentlichungsnummer: **0 482 491 A2**

(12) **EUROPÄISCHE PATENTANMELDUNG**

(21) Anmeldenummer: **91117623.8**

(51) Int. Cl.5: **A01N 43/60**

(22) Anmeldetag: **16.10.91**

(30) Priorität: **20.10.90 DE 4033387**

(43) Veröffentlichungstag der Anmeldung:
**29.04.92 Patentblatt 92/18**

(84) Benannte Vertragsstaaten:
**AT BE CH DE ES FR GB IT LI NL SE**

(71) Anmelder: **HOECHST AKTIENGESELLSCHAFT**
**Postfach 80 03 20**
**W-6230 Frankfurt am Main 80(DE)**

(72) Erfinder: **Hacker, Erwin, Dr.**
**Margarethenstrasse 16**
**W-6203 Hochheim am Main(DE)**
Erfinder: **Schumacher, Hans, Dr.**
**Claudiusstrasse 4**
**W-6093 Flörsheim(DE)**
Erfinder: **Röttele, Manfred, Dr.**
**Hornauerstrasse 133**
**W-6233 Kelkheim (Taunus)(DE)**
Erfinder: **Tylson, Emilio Carlos**
**Johannes-Allee 41**
**W-6230 Frankfurt am Main 80(DE)**
Erfinder: **Hess, Martin, Dr.**
**Buchenweg 83**
**W-6500 Mainz(DE)**

(54) **Synergistische herbizide Mittel.**

(57) Die Erfindung betrifft herbizide Mittel, welche
A) die Verbindung der Formel (I)

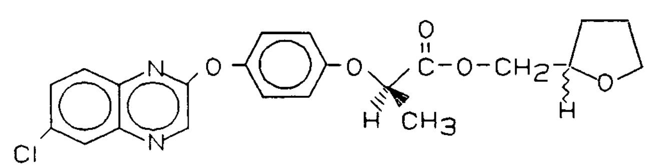

(I)

B) in Kombination mit ein oder mehreren Verbindungen aus der Gruppe Fenoxaprop-ethyl, Glufosinate, Herbizide, die vornehmlich in Beta-Rüben selektiv sind, Herbizide, die vornehmlich in landwirtschaftlich kultivierten Arten aus der Familie der Leguminosen selektiv sind, Herbizide, die vornehmlich in Flachs und Lein selektiv sind, und Herbizide, die in landwirtschaftlichen Kulturen aus der Familie der Cruciferen selektiv sind,
enthalten.

EP 0 482 491 A2

Die Erfindung liegt auf dem Gebiet der Pflanzenschutzmittel, die gegen monokotyle und dikotyle Unkräuter eingesetzt werden können.

UBI-C 4874 (I) mit der chemischen Bezeichnung (2R)-2-[4-(6-Chlorchinoxalin-2-yl-oxy)-phenoxy]-propionsäure-(±)-tetrahydrofurfurylester ist ein herbizider Wirkstoff, der im Nachauflauf-Verfahren zur Bekämpfung von annuellen und perennierenden Ungräsern-eingesetzt werden kann. Mit Aufwandmengen von 5-250 g ha, bezogen auf reinen Wirkstoff, werden eine
Vielzahl von wirtschaftlich wichtigen Schadgräsern in wichtigen breitblättrigen Kulturarten wie Sojabohne, Rüben, Baumwolle, Raps, Sonnenblumen, Erbsen, Kartoffeln, Linsen, Flachs, Erdnuß u.a. erfaßt. Die Kulturpflanzen tolerieren den in den Emulsionskonzentraten zur Applikation verwendeten Wirkstoff ohne qualitative und quantitative Veränderungen. Der Zusatz von Paraffin-Ölen, pflanzlichen Ölen oder Netzmitteln ist zur Wirkungsabsicherung bzw. Wirkungsverstärkung in der praktischen Anwendung angezeigt.

Der Wirkstoff ist aus Publikationen bekannt, z.B. A.R. Bell et al., Brighton Crop. Protection Conference-Weeds-1989, Seiten 65-70.

Überraschenderweise wurden nun in biologischen Versuchen einige herbizide Wirkstoffe gefunden, die bei gemeinsamer Ausbringung mit UBI-C4874 ausgesprochen synergistische Effekte in der herbiziden Wirksamkeit ergeben.

Gegenstand der vorliegenden Erfindung sind herbizide Mittel, gekennzeichnet durch einen herbizid wirksamen Gehalt an einer Kombination aus

A) der Verbindung der Formel (I)

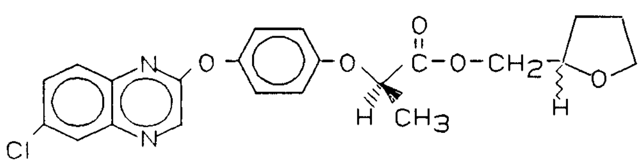

(I)

und

B) einer oder mehreren Verbindung(en) aus der Gruppe, welche die Verbindungen

B1) 2-[4-(6-Chlor-benzoxazol-2-yloxy)-phenoxy]-propionsäure (B1) und deren Ester, vorzugsweise der Ethylester,

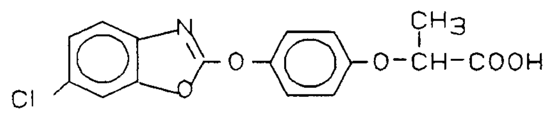

(B1),

B2) Glufosinate und dessen Salze, vorzugsweise das Monoammoniumsalz,

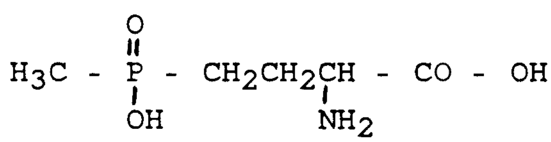

(B2),

B3) Herbizide, die vornehmlich in Beta-Rüben selektiv sind und aus der Gruppe Phenmedipham, Desmedipham, Ethofumesate, Metamitron, Clopyralid und Chloridazon ausgewählt sind,

B4) Herbizide, die vornehmlich in landwirtschaftlich kultivierten Arten aus der Familie der Leguminosen, wie Sojabohne, Ackerbohne und Phaseolus-Bohne, selektiv sind und aus der Gruppe enthaltend Nitrodiphenylether, wie Lactofen, Acifluorfen und Fomesafen, Imidazolinone, wie Imazethapyr und Imazaquin, Bentazone und Sulfonylharnstoffe, wie Amidosulfuron, Chlorimuron und Thiameturonmethyl, ausgewählt sind,

B5) Herbizide, die vornehmlich in den landwirtschaftlichen Kulturen Flachs und Lein selektiv sind und aus der Gruppe enthaltend Hydroxybenzonitrile, wie Bromoxynil und Ioxynil, und Phenoxyessigsäurederivate, wie MCPA, ausgewählt sind

und

B6) Herbizide, die vornehmlich in den landwirtschaftlichen Kulturen aus der Familie der Cruciferen, wie Raps und Rübsen, selektiv sind und aus der Gruppe Carbetamid, Dimefuron, Benazolin und dessen Ester, Metazachlor und Propyzamid ausgewählt sind,

enthält.

Allen Wirkstoffen ist gemeinsam, daß sie vorzugsweise im Nachauflaufverfahren appliziert und über die grünen Pflanzenteile aufgenommen werden.

Die Verbindung A (Verbindung der Formel I) ist aus der anfangs genannten Veröffentlichung bekannt.

Die Verbindungen der Gruppen B1 bis B6 sind bekannt und überwiegend in "The Pesticide Manual", British Crop Protection Council, 8th Ed., 1987 beschrieben; siehe zu B1 ("Fenoxaprop" und "Fenoxaprop-ethyl") S. 379; zu B2 ("Glufosinate"), S. 488; zu B3 siehe "Phenmedipham" auf S. 652, 653, "Desmedipham" auf S. 242-243, "Ethofumesate" auf S. 353-354, "Metanitron" auf S. 536, "Clopyralid" auf S. 189-190 und "Chloridazon" auf S. 155-156; zu B4 siehe z.B. "Acifluorfen" auf S. 3, "Fomesafen" auf S. 428, "Imazethapyr" auf S. 475, "Imazaquin auf S. 474, "Bentazone" auf S. 63-64; zu B5 siehe z.B. "Bromoxynil" auf S. 100-102, "Ioxynil" auf S. 479-482 und "MCPA" auf S. 514-517; zu B6 siehe z.B. "Dimefuron" auf S. 293, "Benazolin" auf S. 51-52, "Metazachlor" auf S. 537, "Propyzamide" auf S. 720 und "Carbetamide" auf S. 129.

Einige der genannten Wirkstoffe sind in Farm Chemicals Handbook'90, Meister Publishing Company, Willoughby, Ohio, USA 1990 beschrieben, z.B. zu B4 siehe common names "Lactofen" auf S. C 72, "Chlorimuron" und "Clorimuron-ethyl" auf S. C 72. "Thiameturonmethyl" entspricht DPX-MG316, siehe Farm Chemicals Handbook, S. C 152.

"Amidosulfuron", d.h. 3-(4,6-Dimethoxypyrimidin-2-yl)-1-(N-methyl-N-(methylsulfonyl)-aminosulfonyl)-harnstoff, ist ein Sulfonylharnstoff-Herbizid zur Bekämpfung von breitblättrigen Unkräutern in Getreide (vgl. Z. Pfl. Krankh. Pfl./Schutz, Sonderheft XII, 489-497 (1990)).

Fenoxaprop-ethyl ist ein herbizider Wirkstoff zur Bekämpfung von Ungräsern in landwirtschaftlichen Kulturen wie Sojabohne, Raps, Zuckerrüben, Kartoffeln u.a.. In der DE 26 40 730 wurde er erstmals beschrieben. Er wird inzwischen als Racemat und auch bereits als optisch aktives D(+)-Isomer (Common name: Fenoxaprop-P-ethyl) verwendet. Das Racemat und das P(+)-Isomer und deren Gemische sind erfindungsgemäß einsetzbar und von Formel B1 umfaßt.

Glufosinate-ammonium ist ein Blatt-Herbizid, das im Nachauflauf-Verfahren zur Bekämpfung von Unkräutern und Ungräsern in Plantagen-Kulturen und auf Nichtkulturland sowie mittels spezieller Applikationstechniken auch zur Zwischenreihenbekämpfung in landwirtschaftlichen Flächenkulturen wie Mais, Baumwolle u.a. eingesetzt wird. Die Formel B2 umfaßt auch die optischen Isomeren von Glufosinate insbesondere auch L-Phosphinothricin und dessen Ammoniumsalz.

Von besonderem Interesse sind erfindungsgemäße herbizide Mittel, die die Verbindung der genannten Formel (I) und eine der Verbindungen B1 bis B6 enthalten.

Bevorzugt sind auch herbizide Mittel, welche die Verbindung der Formel (I) in Kombination mit Fenoxaprop-ethyl, Fenoxaprop-P-ethyl, Glufosinate-ammonium oder einer oder mehreren Verbindungen aus der Gruppe Phenmedipham, Ethofumesate und Metamitron oder einer oder mehreren Verbindungen aus der Gruppe Lactofen, Imazethapyr, Imazaquin und Thiamethuronmethyl oder eine oder mehrere Verbindungen aus der Gruppe MCPA und Bromoxynil oder eine oder mehrere Verbindungen aus der Gruppe Carbetamide, Dimefuron und Benazolin bzw. dessen Ester enthalten.

Die erfindungsgemäßen herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffkombinationen gut erfaßt. Im einzelnen seien beispielhaft einige Vertreter der mono- und dikotylen Unkrautflora genannt, die durch die erfindungsgemäßen Mittel kontrolliert werden können, ohne daß durch die Nennung eine Beschränkung auf bestimmte Arten erfolgen soll.

Auf der Seite der monokotylen Unkrautarten werden z. B. Avena, Lolium, Alopecurus, Phalaris, Echinochloa, Digitaria, Setaria etc. sowie Cyperusarten aus der annuellen Gruppe und auf seiten der perennierenden Spezies Agropyron, Cynodon, Imperata sowie Sorghum etc. und auch ausdauernde Cyperusarten gut erfaßt.

Bei dikotylen Unkrautarten erstreckt sich das Wirkungsspektrum auf Galium, Viola, Veronica, Lamium, Chenopodium, Atriplex, Stellaria, Amaranthus, Sinapis, Ipomoea, Matricaria, Anthemis, Abutilon, Sida etc. auf der annuellen Seite sowie auf Convolvulus, Cirsium, Rumex, Artemisia etc. bei den perennierenden Unkräutern.

Bei Applikation der Wirkstoffkombinationen auf die grünen Pflanzenteile im Nachauflaufverfahren tritt ebenfalls sehr rasch nach der Behandlung ein drastischer Wachstumsstop ein, und die Unkrautpflanzen bleiben in dem zum Applikationszeitpunkt vorhandenen Wuchsstadium stehen oder sterben nach einer

gewissen Zeit mehr oder weniger schnell ab, so daß auf diese Weise eine für die Kulturpflanzen schädliche Unkrautkonkurrenz sehr früh und nachhaltig durch den Einsatz der neuen erfindungsgemäßen Mittel beseitigt werden kann.

Obgleich die erfindungsgemäßen Mittel eine ausgezeichnete herbizide Aktivität gegenüber mono- und dikotylen Unkräutern aufweisen, werden Kulturpflanzen wirtschaftlich bedeutender Kulturen wie z.B. Rüben, Raps, Ackerbohne, Sojabohne, Flax u.a. nur unwesentlich oder gar nicht geschädigt. Die Mittel eignen sich aus diesen Gründen sehr gut zur selektiven Bekämpfung von unerwünschtem Pflanzenwuchs in landwirtschaftlichen Nutzpflanzungen oder Dauerkulturen bzw. im nicht selektivem Bereich. Der Einsatzbereich hängt von dem Wirkungsspektrum bzw. der Selektivität der Einzelwirkstoffe ab und kann aus den bekannten Daten der Einzelwirkstoffe grob abgeschätzt werden.

Mit den erfindungsgemäßen Wirkstoffkombinationen wird z. B. eine herbizide Wirkung erreicht, die über das hinausgeht, was als additive Wirkung der Einzelkomponenten zu erwarten gewesen ist. Solche Wirkungssteigerungen erlauben es, die Einsatzmengen der einzelnen Wirkstoffe erheblich zu reduzieren. Bei vergleichbaren Einsatzmengen ist das bekämpfte Unkraut/Ungras-Spektrum durch die synergistischen Effekte wesentlich breiter. Gleichzeitig werden bei den meisten Kombinationen Eigenschaften, die in der praktischen Anwendung äußerst wichtig sind, wesentlich verbessert. Dazu zählen z.B. die Wirkungsgeschwindigkeit, die Dauerwirkung, die Anwendungsflexibilität u.a.. Dies erlaubt eine umfassende schnelle, dauerhafte und billige Ungras- und Unkrautbekämpfung. Solche Eigenschaften sind deshalb wirtschaftlich fortschrittlich, weil sie dem Anwender erhebliche Vorteile bei der praktischen Unkrautbekämpfung bieten, indem er Unkräuter billiger oder rascher oder dauerhafter oder mit geringerer Anzahl durchzuführender Einzelapplikationen bekämpfen kann und dadurch in einem Kulturpflanzenbestand mehr Ertrag erntet.

Die Mischungsverhältnisse A : B können innerhalb weiter Grenzen schwanken und liegen in der Regel bei 100:1 bis 1 : 1000 bezogen auf das Gewicht. Die Wahl des Mischungsverhältnisses ist z. B. abhängig vom Mischungspartner, Entwicklungsstadium der Unkräuter, Kulturart, Ungräser, Unkrautspektrum, Umweltfaktoren und Klimabedingungen. Vorzugsweise werden Mischungsverhältnisse von 15:1 bis 1:700 angewendet, insbesondere

A : B1 von 10 : 1 bis 1 : 5
A : B2 von 1 : 8 bis 1 : 200
A : B3 von 5 : 1 bis 1 : 700
A : B4 von 15 : 1 bis 1 : 400
A : B5 von 2 : 1 bis 1 : 200
A : B6 von 1 : 4 bis 1 : 500.

Die Aufwandmengen des Herbizids A in den Wirkstoffmischungen liegen bevorzugt zwischen 5 und 120 g/ha, die Aufwandmengen der Wirkstoff der Gruppen B1-B6 von 5 bis 4000 g/ha, insbesondere B1 von 5 bis 120 g/ha, B2 von 100 bis 1000 g/ha, B3 von 100 bis 4000 g/ha, B4 von 5 bis 2000 g/ha, B5 von 100 bis 2000 g/ha und B6 von 500 bis 1700 g/ha.

Die erfindungsgemäßen Wirkstoffkombinationen können sowohl als Mischformulierungen der beiden oder mehreren Komponenten vorliegen, die dann in üblicher Weise mit Wasser verdünnt zur Anwendung gebracht werden, oder als sogenannte Tankmischungen durch gemeinsame Verdünnung der getrennt formulierten Komponenten mit Wasser hergestellt werden.

Die Verbindungen A und B oder deren Kombinationen können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), emulgierbare Konzentrate (EG), wäßrige Lösungen (SL), Emulsionen (EW) wie Öl-in Wasser- und Wasser-in-Öl-Emulsionen, versprühbare Lösungen oder Emulsionen, Dispersionen auf Öl- oder Wasserbasis, Suspoemulsionen, Stäubemittel (DP), Granulate wie wasserdispergierbare Granulate (WG), ULV-Formulierungen, Mikrokapseln oder Wachse.

Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N. Y., 2nd Ed. 1972-73; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H. v. Olphen, "Introduction to Clay Colloid Chemistry"; 2nd Ed., J. Wiley & Sons, N.Y., Marsden, "Solvents Guide", 2nd Ed., Interscience, N.Y. 1950; McCutcheon's, "Detergents and Emulsifiers Annual", MC Publ. Corp., Ridgewood

N.J.; Sisley and Wood, "Encyclopedia of Surface Active Agents", Chem. Publ. Co. Inc., N. Y. 1964; Schönfeldt, Grenzflächenaktive Äthylenoxidaddukte", Wiss. Verlagsgesell., Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z. B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Netzmittel, z. B. polyoxethylierte Alkylphenole, polyoxethylierte Fettalkohole oder -Fettamine, Fettalkoholpolyglykolethersulfate, Alkansulfonate oder Alkylbenzolsulfonate und Dispergiermittel, z. B. ligninsulfonsaures Natrium, 2,2'-dinaphthylmethan-6,6'disulfonsaures Natrium, dibutylnaphthalin-sulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffes mit fein verteilten festen Stoffen, z. B. Talkum, natürlichen Tonen wie Kaolin, Bentonit und Pyrophyllit oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten übichen Weise - gewünschtenfalls in Mischung mit Düngemitteln - granuliert werden.

Die agrochemischen Zubereitungen enthalten in der Regel 0,1 bis 99 Gewichtsprozent, insbesondere 2 bis 95 Gew.-%, Wirkstoffe A + B. Die Konzentrationen der Wirstoffe A + B können in den Formuleriungen verschieden sein.

In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 85 Gew.-%, vorzugsweise 5 bis 80 Gew.-% betragen. Staubförmige Formulierungen enthalten etwa 1 bis 25 Gew.-%, meistens 5 bis 20 Gew.-% an Wirkstoff, versprühbare Lösungen etwa 0,2 bis 25 Gew.-%, vorzugsweise 2 bis 20 Gew.-% Wirkstoff. Bei Granulaten wie wasserdispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Mit den äußeren Bedingungen wie Temperatur, Feuchtigkeit, der Art des verwendeten Herbizids u.a. variiert die erforderliche Aufwandmenge der Verbindungen der Formel (I).

Folgende Beispiele dienen zur Erläuterung der Erfindung:

A. Formulierungsbeispiele

a) Ein Stäubmittel wird erhalten, indem man 10 Gew.-Teile einer erfindungsgemäßen Wirkstoffkombination und 90 Gew.-Teile Talkum als Inertstoff mischt und in einer Schlagmühle zerkleinert.

b) Ein in Wasser leicht dispergierbares, benetzbares Pulver wird erhalten, indem man 25 Gewichtsteile Wirkstoff A + B 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile Wirkstoff A + B mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis über 277 °C) mischt und in einer Reibkugelmühle auf eine Feinheit von unter 5 Mikron vermahlt.

d) Ein emulgierbares Konzentrat wird erhalten aus 15 Gew.-Teilen Wirkstoffe A+B, 75 Gew.-Teilen Cyclohexanon als Lösemittel und 10 Gew.-Teilen oxethyliertes Nonylphenol als Emulgator.

e) Ein in Wasser dispergierbares Granulat wird erhalten indem man

| | | |
|---|---|---|
| 75 | Gewichtsteile | Wirkstoffe A + B, |
| 10 | " | ligninsulfonsaures Calcium, |
| 5 | " | Natriumlaurylsulfat, |
| 3 | " | Polyvinylalkohol und |
| 7 | " | Kaolin |

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

| | | |
|---|---|---|
| 25 | Gewichtsteile | Wirkstoff A + B, |
| 5 | " | 2,2'-dinaphthylmethan-6,6'-disulfonsaures Natrium, |
| 2 | " | oleoylmethyltaurinsaures Natrium, |
| 1 | Gewichtsteil | Polyvinylalkohol, |
| 17 | Gewichtsteile | Calciumcarbonat und |
| 50 | " | Wasser |

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

Nach den unter a) bis f) beschriebenen Formulierungen werden beispielsweise die in der folgenden Tabelle 1 enthaltenen Wirkstoffkombinationen formuliert:

Tabelle 1

| Wirkstoff A | Wirkstoff B | Verhältnis A:B |
|---|---|---|
| (I) | Fenoxaprop-P-ethyl | 10:1 |
| | | 1:1 |
| | | 1:5 |
| (I) | Glufosinate-ammonium | 10:1 |
| | | 1:1 |
| | | 1:5 |
| (I) | Phenmedipham | 5:1 |
| | | 1:1 |
| | | 1:10 |
| (I) | Lactofen | 15:1 |
| | | 5:1 |
| | | 1:1 |
| | | 1:100 |
| (I) | Bromoxynil | 2:1 |
| | | 1:1 |
| | | 1:100 |
| | | 1:200 |
| (I) | Benazolin-ethyl | 5:1 |
| | | 2:1 |
| | | 1:1 |
| | | 1:10 |

B. Biologische Beispiele

Unter Freilandbedingungen wurden Versuchsfelder mit sandigem Lehmboden praxisgerecht mit Winterraps (BRSNW) bestellt (Aussaat August, Saatmenge 5 kg/ha, Düngung praxisüblich). Nach dem Auflaufen der Kulturpflanzen stellte sich ein hoher Verseuchungsgrad mit Agropyron repens (AGRRE) und Ausfallgerste (HORVW) ein. Im 1- bis 3-Blattstadium bzw. bei Bestockungsbeginn (21) dieser Ungräser wurden die in Form von benetzbaren Pulvern oder Emulsionskonzentraten formulierten erfindungsgemäßen Wirkstoffkombinationen sowie in parallelen Versuchen die entsprechend formulierten Einzelwirkstoffe (siehe Tabelle 2) dann als wäßrige Suspensionen bzw. Emulsionen mit einer Wasseraufwandmenge von umgerechnet 300 bis 800 l/ha in unterschiedlichen Dosierungen auf die Oberfläche der Versuchsfläche appliziert.

40 Tage nach Applikation wurden die herbiziden Effekte durch visuelle Bonitur der Pflanzenschädigung im Vergleich zu unbehandelten Pflanzen festgestellt. In allen Fällen wurde bei den Kombinationen unterschieden zwischen dem errechneten und dem gefundenen Wirkungsgrad. Der errechnete, theoretisch zu erwartende Wirkungsgrad einer Kombination wird ermittelt nach der Formel von S. R. Colby: Calculation of synergistic and antagonistic responses of herbicide combinations, Weeds 15 (1967) 20-22.

Diese Formel lautet:

$$E = X + Y - \frac{X \cdot Y}{100}$$

wobei

X = % Schädigung durch Herbizid A bei x kg/ha Aufwandmenge;

Y = % Schädigung durch Herbizid B bei y kg/ha Aufwandmenge;

E = die zu erwartende Schädigung durch die Herbidzide A + B bei x + y kg/ha.

Ist die tatsächliche Schädigung größer als die rechnerisch zu erwartende, so ist die Wirkung der Kombination mehr als additiv, d. h. es liegt ein synergistischer Wirkungseffekt vor.

Die erfindungsgemäßen Wirkstoffkombinationen haben eine herbizide Wirkung, die höher ist als sie aufgrund der beobachteten Wirkungen der Einzelkomponenten bei alleiniger Anwendung zu erwarten ist. Die Wirkstoffkombinationen sind somit synergistisch (vgl. Tabelle 2).

Tabelle 2: Wirkstoffkombination UBI-C 4874 (I) plus Fenoxaprop-P-ethyl

| | | % Schädigung 40 Tage nach Applikation [Stadium d. Appl.] | | |
|---|---|---|---|---|
| Wirkstoffe | Dosis [g ai/ha] | AGRRE [11-21] | HORVW [13] | BRSNW [19] |
| I | 15 | 43 | 35 | 0 |
| | 30 | 56 | 86 | 0 |
| | 45 | 67 | 88 | 0 |
| | 60 | 85 | 95 | 0 |
| B1.1 | 15 | 0 | 20 | 0 |
| | 30 | 0 | 20 | 0 |
| | 45 | 3 | 27 | 0 |

Forsetzung von Tabelle 2

| Wirkstoffe | Dosis [g ai/ha] | % Schädigung 40 Tage nach Applikation [Stadium d. Appl.] AGRRE [11-21] | HORVW [13] | BRSNW [19] |
|---|---|---|---|---|
| I+B1.1 | 15+15 | 77 (43) | 58 (48) | 0 |
| | 15+30 | 78 (56) | 80 (48) | 0 |
| | 15+45 | 83 (45) | 87 (53) | 0 |
| | 30+15 | 73 (43) | 89 (88) | 0 |
| | 30+30 | 80 (56) | 92 (88) | 0 |
| | 30+45 | 88 (57) | 95 (89) | 0 |
| | 45+15 | 86 (43) | 95 (90) | 0 |
| | 45+30 | 92 (56) | 97 (90) | 0 |
| | 45+45 | 94 (64) | 98 (91) | 0 |

Abkürzungen zu Tabelle 2:

I = UBI-C 4874 als 12 %iges Emulsionskonzentrat (EC 120) und 5 l/h Öl
B1.1 = Fenoxaprop-P-ethyl als 7,5 %ige Öl-in-Wasser-Emulsion
ai = active ingredient (bezogen auf reinen Wirkstoff)
( ) = Erwartungswert nach Colby

Aus Tabelle 2 wird ersichtlich, daß die herbizide Wirksamkeit von UBI-C 4874, in Mischung mit Öl ausgebracht, bei gemeinsamer Ausbringung mit Fenoxaprop-ethyl deutlich erhöht ist. Bei Agropyron repens und Ausfallgerste liegen synergistische Wirkungssteigerungen vor. Bei Agropyron repens übertrifft die Wirkung der Herbizid-Kombinationen sogar die formale Summe der Wirkung der Einzelwirkstoffe.

Bei Ausfallgerste (HORVW) werden die theoretisch nach COLBY ermittelten Erwartungswerte der Herbizidkombination im Versuch ebenfalls deutlich übertroffen.

Die Kulturverträglichkeit bei Winterraps (BRSNW) wird weder durch die Einzelwirkstoffe noch durch die Herbizid-Kombinationen beeinträchtigt.

Beispiel 2

Annuelle Ungräser waren unter natürlichen Freilandbedingungen auf Nichtkulturland aufgelaufen.

Nach Erreichen der Entwicklungsstadien 25 bis 29 (Mitte bis Ende der Bestockungsphase) wurden die in Tabelle 3 angegebenen Herbizide allein und in Kombination auf Teilstücken von 10 $m^2$ mit Parzellenspritzgeräten ausgebracht (analog Beispiel 1). 28 Tage nach Applikation wurde die herbizide Wirksamkeit der behandelten Teilstücke im Vergleich zu den unbehandelten Kontrollparzellen durch visuelle Bonituren (analog Beispiel 1) festgehalten. Dabei wurden die Schädigung der Pflanzen sowie deren Wachstum und Entwicklung prozentual ausgewertet.

Die Ergebnisse sind in Tabelle 3 dargestellt.

Tabelle 3: Wirkstoffkombination UBI-C 4874 (I) plus Glufosinate-ammonium

| Wirkstoffe | Dosis [g ai/ha] | % Schädigung 28 Tage nach Applikation [Stadium bei Appl.] PHAMI [25] | PHAPA [25] | HORVS [29] | BRODI [29] |
|---|---|---|---|---|---|
| I | 30 | 15 | 0 | 42 | 65 |

Forsetzung von Tabelle 3

| Wirkstoffe | Dosis [g ai/ha] | % Schädigung 28 Tage nach Applikation [Stadium der Appl.] PHAMI [25] | PHAPA [25] | HORVS [29] | BRODI [29] |
|---|---|---|---|---|---|
| B2.1 | 300 | 50 | 40 | 27 | 35 |
| | 600 | 97 | 96 | 65 | 85 |
| I+B2.1 | 30+300 | 95 | 94 | 100 | 100 |

Abkürzungen zu Tabelle 3:

I = UBI-C 4874 als 12 %iges emulgierbares Konzentrat
B2.1 = Glufosinateammonium als 20 %ige wäßrige Lösung
ai = Bezogen auf reinen Wirkstoff

Die Wirksamkeit der Herbizid-Kombination liegt deutlich über der Wirkung der Einzelwirkstoffe und ist vergleichbar oder sogar höher als die Wirkung bei der doppelten Aufwandmenge von Glufosinate-ammonium allein. Durch die synergistischen Effekte wird mit niedrigen Wirkstoff-Mengen eine höhere und breitere Wirksamkeit erzielt.

Beispiel 3

Auf praxisüblichen bewirtschafteten Versuchsflächen wurden Zuckerrüben kultiviert. Nach dem Auflaufen der Zuckerrüben (BEAVU) stellte sich eine hohe Verseuchung mit Hühnerhirse (Echinochloa crus galli = ECGCR) und Flughafer (Avena fatua = AVEFA) ein.

Im Entwicklungsstadium Mitte Bestockung (E 25) bis Ende Bestockung (E 29) wurden die Herbizide allein und deren Kombination mit Parzellenspritzgeräten (300 Liter Wasser/ha) analog Beispiel 1 appliziert. 14 Tage bzw. 28 Tage nach Applikation wurden die herbiziden Effekte an den Schadgräsern bzw. Kulturpflanzen durch visuelle Bonituren festgehalten.

Die Ergebnisse sind in Tabelle 4 festgehalten.

Tabelle 4: Wirkstoffkombination UBI-C 4874 (I) plus Phenmedipham

| Wirkstoffe Entwicklungsstadium bei Applikation | Dosis g ai/ha | % Schädigung bei [Stadium der Applikation] ECGCR [25-29] | AVEFA [25-29] | BEAVU [6-8 Blätter] |
|---|---|---|---|---|
| I | 30 | 15 | 65 | 0 |
| | 60 | 90 | 85 | 0 |
| B3.1 | 942 | 10 | 25 | 0 |
| | 1256 | 15 | 75 | 0 |
| I+B3.1 | 30+942 | 75 (23) | 85(74) | 0 |
| | 60+942 | 98 (91) | 97(89) | 0 |

Abkürzungen zu Tabelle 4:

I = UBI-C 4874 zusammen mit 2 l/ha Öl

B3.1 = Phenmedipham zusammen mit 2 l/ha Öl

I+B3.1 = UBI-C 4874 + Phenmedipham + 2 l/ha Öl

( ) = Erwartungswert nach Colby

Die Ergebnisse zeigen, daß die herbizide Wirksamkeit bei gemeinsamer Ausbringung deutlich über den Effekten der Herbizide allein - selbst bei höherer Aufwandmenge - liegt. Die Erwartungswerte nach COLBY werden deutlich übertroffen.

Daneben werden beide Schadgräser in Gegensatz zur Applikation der Einzelwirkstoffe mit gleich guter Wirksamkeit erfaßt, was die Ausweitung des Wirkungsspektrums bei gleichzeitiger Wirkstoff-Reduktion durch die synergistischen Effekte ermöglicht.

Die Kulturpflanzen werden weder durch die Herbizide allein noch durch deren Kombination geschädigt.

**Patentansprüche**

**1.** Herbizide Mittel gekennzeichnet durch einen herbizid wirksamen Gehalt an

A) der Verbindung der Formel (I)

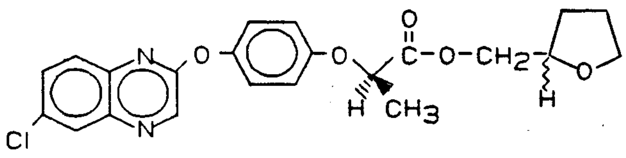 (I)

und

B) einer oder mehreren Verbindung(en) aus der Gruppe, welche die Verbindungen

B1) 2-[4-(6-Chlor-benzoxazol-2-yloxy)-phenoxy]-propionsäure (B1) und deren Ester, vorzugsweise der Ethylester,

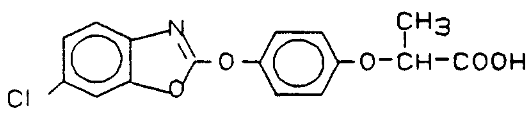 (B1),

B2) Glufosinate und dessen Salze,

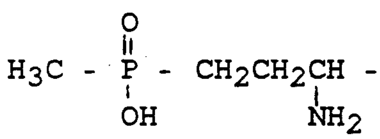 (B2),

B3) Herbizide, die vornehmlich in Beta-Rüben selektiv sind und aus der Gruppe Phenmedipham, Desmedipham, Ethofumesate, Metamitron, Clopyralid und Chloridazon ausgewählt sind,

B4) Herbizide, die vornehmlich in landwirtschaftlich kultivierten Arten aus der Familie der Leguminosen selektiv sind und aus der Gruppe enthaltend Nitrodiphenylether, Imidazolinone, Bentazone und Sulfonylharnstoffe ausgewählt sind,

B5) Herbizide, die vornehmlich in den landwirtschaftlichen Kulturen Flachs und Lein selektiv sind und aus der Gruppe enthaltend Hydroxybenzonitrile und Phenoxyessigsäurederivate ausgewählt sind,

und

B6) Herbizide, die vornehmlich in den landwirtschaftlichen Kulturen aus der Familie der Cruciferen selektiv sind und aus der Gruppe Carbetamid, Dimefuron, Benazolin und dessen Ester, Metazachlor und Propyzamid ausgewählt sind,

enthält.

**2.** Mittel nach Anspruch 1, dadurch gekennzeichnet, daß sie eine Verbindung der Formel (I) und eine Verbindung aus den Gruppen B1 bis B6 enthalten.

**3.** Mittel nach Anspruch 1 oder 2, dadurch gekennzeichnet, daß sie 0,1 bis 99 Gew.-% der Wirkstoffe A und B neben üblichen Formulierungshilfsmitteln enthalten.

**4.** Mittel nach einem oder mehreren der Ansprüche 1 bis 3, dadurch gekennzeichnet, daß sie die Wirkstoffe A und B im Gewichtsverhältnis 100 :1 bis 1 : 1000 enthalten.

**5.** Mittel nach Anspruch 4, dadurch gekennzeichnet, daß das Gewichtsverhältnis 15 : 1 bis 1 : 700 beträgt.

**6.** Verfahren zur Herstellung eines Mittels nach einem oder mehreren der Ansprüche 1 bis 5, dadurch gekennzeichnet, daß man ein oder mehrere Verbindungen A mit ein oder mehreren Verbindungen B analog einer üblichen Pflanzenschutzmittelformulierung aus der Gruppe, enthaltend Spritzpulver, emulgierbare Konzentrate, wäßrige Lösungen, Emulsionen, versprühbare Lösungen (tank-mix), Dispersionen auf Öl- oder Wasserbasis, Suspoemulsionen, Stäubemittel, wasserdispergierbare Granulate, ULV-Formulierungen, Mikrokapseln und Wachse, formuliert.

7. Verfahren zur Bekämpfung von unerwünschten Pflanzen, dadurch gekennzeichnet, daß man auf diese oder deren Anbauflächen eine herbizid wirksame Menge einer der in einem oder mehreren der Ansprüche 1 bis 5 definierten Kombinationen von Wirkstoffen A + B appliziert.

8. Verfahren nach Anspruch 7, dadurch gekennzeichnet, daß Unkräuter in Nutzpflanzenkulturen selektiv bekämpft werden.

9. Verfahren nach Anspruch 8, dadurch gekennzeichnet, daß die Nutzpflanzenkultur eine aus der Gruppe der dikotylen Kulturarten oder Dauerkulturen ist.

10. Verwendung der herbiziden Mittel nach einem oder mehreren der Ansprüche 1 bis 5 zur selektiven oder nichtselektiven Unkrautbekämpfung.

**Patentansprüche für folgenden Vertragsstaat : ES**

1. Verwendung von herbiziden Mitteln zur Unkrautbekämpfung, dadurch gekennzeichnet, daß die Mittel einen herbizid wirksamen Gehalt an

A) der Verbindung der Formel (I)

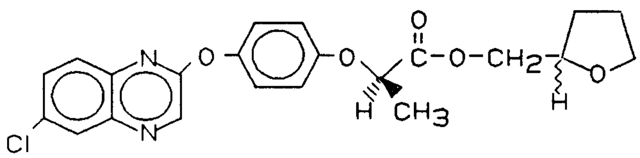

(I)

und

B) einer oder mehreren Verbindung(en) aus der Gruppe, welche die Verbindungen

B1) 2-[4-(6-Chlor-benzoxazol-2-yloxy)-phenoxy]-propionsäure (B1) und deren Ester, vorzugsweise der Ethylester,

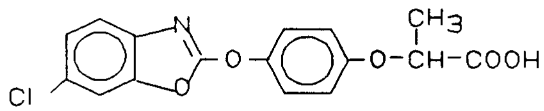

(B1),

B2) Glufosinate und dessen Salze,

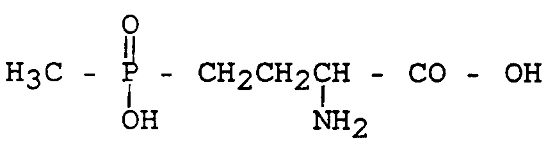

(B2),

B3) Herbizide, die vornehmlich in Beta-Rüben selektiv sind und aus der Gruppe Phenmedipham, Desmedipham, Ethofumesate, Metamitron, Clopyralid und Chloridazon ausgewählt sind,

B4) Herbizide, die vornehmlich in landwirtschaftlich kultivierten Arten aus der Familie der Leguminosen selektiv sind und aus der Gruppe enthaltend Nitrodiphenylether, Imidazolinone, Bentazone und Sulfonylharnstoffe, ausgewählt sind,

B5) Herbizide, die vornehmlich in den landwirtschaftlichen Kulturen Flachs und Lein selektiv sind und aus der Gruppe enthaltend Hydroxybenzonitrile und Phenoxyessigsäurederivate ausgewählt sind,

und

B6) Herbizide, die vornehmlich in den landwirtschaftlichen Kulturen aus der Familie der Cruciferen selektiv sind und aus der Gruppe Carbetamid, Dimefuron, Benazolin und dessen Ester, Metazachlor und Propyzamid ausgewählt sind,

enthält.

2. Verwendung nach Anspruch 1, dadurch gekennzeichent, daß die Mittel eine Verbindung der Formel (I) und eine Verbindung aus den Gruppen B1 bis B6 enthalten.

3. Verwendung nach Anspruch 1 oder 2, dadurch gekennzeichnet, daß die Mittel 0,1 bis 99 Gew.-% der Wirkstoffe A und B neben üblichen Formulierungshilfsmitteln enthalten.

4. Verwendung nach einem oder mehreren der Ansprüche 1 bis 3, dadurch gekennzeichnet, daß sie die Wirkstoffe A und B im Gewichtsverhältnis 100 :1 bis 1 : 1000 enthalten.

5. Verwendung nach Anspruch 4, dadurch gekennzeichnet, daß das Gewichtsverhältnis 15 : 1 bis 1 : 700 beträgt.

6. Verfahren zur Herstellung eines Mittels nach einem oder mehreren der Ansprüche 1 bis 5, dadurch gekennzeichnet, daß man ein oder mehrere Verbindungen A mit ein oder mehreren Verbindungen B analog einer üblichen Pflanzenschutzmittelformulierung aus der Gruppe, enthaltend Spritzpulver, emulgierbare Konzentrate, wäßrige Lösungen, Emulsionen, versprühbare Lösungen (tank-mix), Dispersionen auf Öl- oder Wasserbasis, Suspoemulsionen, Stäubemittel, wasserdispergierbare Granulate, ULV-Formulierungen, Mikrokapseln und Wachse, formuliert.

7. Verfahren zur Bekämpfung von unerwünschten Pflanzen, dadurch gekennzeichnet, daß man auf diese oder deren Anbauflächen eine herbizid wirksame Menge einer der in einem oder mehreren der Ansprüche 1 bis 5 definierten Kombinationen von Wirkstoffen A + B appliziert.

8. Verfahren nach Anspruch 7, dadurch gekennzeichnet, daß Unkräuter in Nutzpflanzenkulturen selektiv bekämpft werden.

9. Verfahren nach Anspruch 8, dadurch gekennzeichnet, daß die Nutzpflanzenkultur eine aus der Gruppe der dikotylen Kulturarten oder Dauerkulturen ist.